# EUROPEAN PATENT SPECIFICATION

(11) **EP 3 440 341 B1**
(45) Date of publication and mention of the grant of the patent: **27.05.2020**
(21) Application number: 16898074.6
(22) Date of filing: 06.04.2016
(51) Int. Cl.: F03B 13/10, B63B 21/50, F03B 13/26, F03B 17/06, F03B 11/00, B63B 35/44

(54) **SUBMERSIBLE PLANT COMPRISING BUOYANT TETHER**
TAUCHFÄHIGE ANLAGE MIT SCHWIMMENDEM HALTEGURT
INSTALLATION SUBMERSIBLE COMPRENANT UNE AMARRE FLOTTANTE

(43) Date of publication of application: 13.02.2019
(73) Proprietor: Minesto AB, 426 71 Västra Frölunda (SE)
(72) Inventor: QUAPPEN, Arne, 412 57 Göteborg (SE); MARZELIUS, Olof, 426 52 Västra Frölunda (SE); MALMQVIST, Jonas, 416 70 Göteborg (SE); WRANNE, Jonas, 426 68 Västra Frölunda (SE)
(74) Representative: Zacco Sweden AB
(86) International application number: PCT/SE2016/050289
(87) International publication number: WO 2017/176179

(56) References cited:
- EP-A1- 1 816 345
- EP-A1- 2 610 481
- EP-A1- 2 610 481
- EP-A2- 2 781 733
- JP-A- S56 157 684
- US-A- 2 397 957
- US-A- 5 855 178
- US-A1- 2007 231 072
- US-A1- 2012 212 350
- US-A1- 2014 308 111

## Description

### TECHNICAL FIELD

The invention relates to a submersible power plant. The submersible power plant is submerged in a fluid. The power plant comprises a structure and a vehicle where the vehicle comprises at least one wing. The vehicle is arranged to be secured to the structure by means of at least one tether. The vehicle is arranged to move in a predetermined trajectory by means of a fluid stream passing the vehicle.

### BACKGROUND ART

Streams and ocean currents, such as tidal stream flows, provide a predictable and reliable source of energy that can be used for generating electrical energy. Stationary, or fixed, power plant systems are known which are submerged and secured in relation to the stream or flow, wherein a turbine is used to generate electrical energy from the flow velocity of the stream. A drawback with stationary stream-driven power plant systems, however, is that the amount of generated electrical energy from a single turbine of a certain size is low, which may be compensated by increasing the number of turbines, or increasing the effective area of the turbines. Those solutions, however, lead to cumbersome and expensive manufacturing, handling and operation of the fixed stream-driven power plant systems. Turbines may also be designed for installation in specific locations having high local flow speeds. This also leads to more complex and costly installation and handling. Moreover, access to such high flow speed locations is relatively limited.

In order to improve the efficiency of the electrical energy generation from tidal stream flows and ocean currents, it is known to provide a submersible power plant system comprising a stream-driven vehicle, as described in e.g. EP 1816345 by the applicant. The stream-driven vehicle typically comprises a wing which is designed to increase the speed of the vehicle by utilizing the stream flow and the resulting hydrodynamic forces acting on the wing. In more detail, the increased speed of the vehicle is achieved by counteracting the stream flow and hydrodynamic forces acting on the vehicle by securing the vehicle to a support structure, typically located at the seabed, by means of a wire member, wherein the vehicle is arranged to follow a certain trajectory which is limited by the length, or range, of the wire. The vehicle is further provided with a turbine coupled to a generator for generating electrical energy while the vehicle moves through the water, wherein the speed of the vehicle influences and contributes to the relative flow velocity at the turbine. The speed of the vehicle allows for that the relative flow velocity at the turbine may be considerably increased in relation to the absolute stream flow speed.

A power plant system comprising a stream-driven vehicle must be equipped with a tether able to handle the conditions of movement along a predetermined trajectory as well as keeping a good position in slack water. During movement along the predetermined trajectory the tether experiences drag along the length of the tether. During slack water the vehicle is not traveling along a predefined trajectory but instead follows the tidal current along a random trajectory. The tether risks becoming tangled with itself, the support structure, the seabed or objects on the seabed when the vehicle follows the tidal current along a random trajectory.

EP 2781733 A2 discloses a submerged system for anchoring a marine device such as a sub-sea kite assembly within a fluid. The system comprises a lower tether member configured for anchoring the submerged system to a seabed. The lower tether member comprises a first buoyant body enabling a positive buoyancy such that the lower tether member is capable of floating in a substantially upright orientation. The system further comprises an upper bearing module operatively connected to the lower tether member, configured for supporting a rotational movement of a marine device.

There is thus a need for an improved submersible power plant comprising an improved tether.

### SUMMARY OF THE INVENTION

One object of the present invention is to provide an inventive submersible plant where the previously mentioned problems are at least partly avoided. This object is achieved by the features of the characterising portion of claims 1 and 15. Variations of the invention are described in the appended dependent claims.

During movement along the predetermined trajectory the tether experiences drag along the length of the tether. If the tether has a hydrodynamic profile over the entire length of the tether, a whiplash effect while the vehicle moves along its predetermined trajectory may occur. The whiplash effect may occur due to that three different forces act on the tether: gravity, lift force arising from the hydrodynamic profile and the centripetal force. Close to the vehicle where the velocity is high the centripetal force is higher than the combined force of gravity and buoyancy. Therefore the resultant force is always pointing outwards for a kite on a circular trajectory. Further down along the tether, the velocity is lower and the centripetal force will at one point be smaller than the sum of the buoyancy and gravity forces. Here the resultant force changes direction from outward to inward and back to outward direction when running on a circular path. This may cause a whiplash effect to take place. Harmful vibrations in the tether may also arise due to that the centre of gravity (CG) and the centre of buoyancy (CB) are separated such that a torque arises. This can be seen by calculating the moment balance over an arbitrary point. The hydrodynamic force usually acts at a point at quarter chord length while the buoyancy force usually acts at the centre of buoyancy (CB) and gravitational and centripetal force at centre of gravity (CG). This torque is not counteracted by the torque created by the lift force of the hydrodynamically shaped tether close to the support structure as the hydrodynamic forces due to the lower velocity are not strong enough to align the tether. During slack water the vehicle follows the tidal current and the tether risks becoming tangled when the vehicle follows the tidal current along a random trajectory, for instance if the tether is heavier than the surrounding fluid and rests on the seabed.

Example embodiments relates to a submersible power plant aiming to solve at least some of the above identified problems. The submersible power plant is submerged in a fluid. The power plant comprises a structure and a vehicle where the vehicle comprises at least one wing. The vehicle is arranged to be secured to the structure by means of at least one tether. The vehicle is arranged to move in a predetermined trajectory by means of a fluid stream passing the vehicle. The tether comprises an upper tether part and a lower tether part. The upper tether part has an average density higher than the fluid, has a hydrodynamic cross section and is arranged to be connected to the vehicle. The upper tether part can also be described as being streamlined or profiled and is aimed at reducing drag for an interval of directions of the fluid flow passing the tether. The lower tether part has an average density lower than the fluid, has a non-hydrodynamic cross section or cross section with a low resistance independent of the direction from which the fluid flows, and is arranged to be connected to the structure.

The problem is solved by the use of a tether with more than one part. In one example embodiment an upper tether part has an average density higher than the fluid and has a hydrodynamic cross section and a lower tether part has an average density lower than the fluid and has a non-hydrodynamic cross section, solves the above mentioned problems. The non-hydrodynamic profile of the lower tether part reduces the hydrodynamic lift of the lower tether part, thereby reducing the whiplash effect that can occur. The hydrodynamic profile of the upper tether part ensures that that part of the tether experiences less drag, which is needed due to the greater distance it needs to travel in relation to the lower tether part. A part of the tether close to the support structure may experience large angles of attack during movement of the vehicle along the predetermined trajectory. A lower tether part having a non-hydrodynamic cross section experiences the same drag independently of the angle of attack and no forces across from the direction of the fluid will arise as it would if the lower tether part had a hydrodynamic cross section. Having a non-hydrodynamic tether part close to the support structure leads to low hydrodynamic forces on that part which avoids aligning the tether against the friction of the swivel or the internal torsion stiffness of the tether.

The difference in density between the upper tether part and the lower tether part enables the tether to assume a non-linear shape, such as an S-shape, when the fluid stream subsides, for instance during slack water when a tidal stream changes direction. The non-linear shape further reduces the risk of damaging or tangling the tether.

The vehicle of the power plant may have an average density lower than the fluid.

This feature further enables control of the position of the vehicle during slack water. The position of the vehicle below the surface of the fluid or above the surface over which the vehicle moves can be controlled by the combination of the lower density of the lower tether part, the higher density of the upper tether part and the lower density of the vehicle.

The length of the upper tether part may be between 30 - 70 % of the length of the tether and the length of the lower tether part may be between 30 - 70 % of the length of the tether. Specifically, the length of the upper tether part may be between 40 - 60 % of the length of the tether and the length of the lower tether part may be between 60 - 40 % of the length of the tether. More specifically, the length of the upper tether part may be 50 % of the length of the tether and the length of the lower tether part may be 50 % of the length of the tether. Having this relationship between the two tether parts assists in achieving the control of the plant both when the vehicle is moving and during slack water when the vehicle is still.

The fluid in which the submersible plant is submerged may be water. The average density of the lower tether part may be between 700 - 900 kg/m3, specifically between 750 - 850 kg/m3, more specifically 800 kg/m3 and the average density of the upper tether part may be between 1050 - 1250 kg/m3, specifically between 1100 - 1200 kg/m3, more specifically 1160 kg/m3.

In another example embodiment the tether comprises an upper tether part, an intermediate tether part and a lower tether part. The upper tether part has an average density higher than the fluid and has a hydrodynamic cross section and a lower tether part has an average density lower than the fluid and has a non-hydrodynamic cross section. The intermediate tether part has an average density lower than the fluid and has a hydrodynamic cross section. The length of the upper tether part may be between 20 - 40 % of the length of the tether, the length of the intermediate tether part may be between 20 - 60 % and the length of the lower tether part may be between 10 - 20 % of the length of the tether.

A further example embodiment of the tether that solves the above described problem can be to have a lower tether part where the lower tether part is axisymmetric and where the CG equals the CB. The lower tether part is in this case axisymmetric both with regards to geometric shape and mass distribution. If the cross section of the lower tether part is elliptic, round or similar and the mass centre and volume centre are located in the centre of the cross section, no torques will arise independent of the orientation of the lower tether part.

The tether may comprise a shell member which forms the outer shape of the tether. The shell member may comprise at least one of an elastomeric material, a thermoplastic material, a thermoset material, a carbon fibre laminate, a glass fibre laminate, a composite material, a material comprising polyurethane, a polyurethane elastomer material, steel and/or combinations thereof. The shell member may comprise an outer layer(s) of fibre, or composite or laminates, wherein an inner region may be filled with filler material.

The density of the lower part may be adjusted by adding gas filled containers to the inner region of the lower tether part. The density of the lower tether part may additionally or alternatively be adjusted by attaching elements with a density lower than the surrounding fluid to the outside of the tether. By adjusting the density of the lower part the behaviour of the lower part can be adapted to fit conditions at various installation sites. The density of the intermediate part may be adjusted by adding gas filled containers to the inner region of the intermediate tether part. The density of the intermediate tether part may additionally or alternatively be adjusted by attaching elements with a density lower than the surrounding fluid to the outside of the tether. By adjusting the density of the intermediate part the behaviour of the lower part can be adapted to fit conditions at various installation sites.

The vehicle may comprise:
- a nacelle comprising a turbine connected to a generator, the turbine being driven by the movement of the vehicle, or a multitude of nacelles each comprising a turbine connected to a generator or a nacelle comprising a multitude of turbines where each is connected to a generator,
- front struts and a rear strut arranged to attach the vehicle to the tether. The rear strut may be omitted and replaced by an elevator while the tether connects to the front struts only.

The turbine-generator arrangement is used to produce electrical power from the movement of the vehicle. The front and, if present, rear struts provide stability and connects the vehicle to the tether.

The upper tether part may connect to the vehicle by means of a top joint. The lower tether part may connect to the structure by means of a bottom joint.

The tether may be flexible in order to assist in achieving the effects described above.

The upper tether part may be arranged to strive to self-align in relation to a relative flow direction of the liquid, by rotating around a rotational, or torsional, axis which is essentially parallel with the main direction of the tether, when the tether portion is moving through the liquid, or in relation to the liquid. The effect of self-alignment of a part of the tether is described in EP 2610481. When the upper tether part is arranged to strive to self-align, the upper tether part rotates in relation to the lower tether part.

A further example embodiment relates to a method for control of a submersible power plant, wherein the method comprises:
- arranging a tether connecting a submersible power plant with a structure, wherein the tether comprises an upper tether part and a lower tether part;
- arranging the upper tether part to have an average density higher than the surrounding fluid,
- arranging the upper tether part to have a hydrodynamic cross section, and
- arranging the upper tether part to be connected to the vehicle;
- arranging the lower tether part to have an average density lower than the surrounding fluid,
- arranging the lower tether part to have a non-hydrodynamic cross section, and
- arranging the lower tether part to be connected to the structure,

wherein in when the submersible power plant moves in a predetermined trajectory, the tether of the submersible power plant experiences a reduction in tether vibrations induced by whiplash; and wherein when the submersible plant does not move in a predetermined trajectory, the tether of the submersible power plant forms an S-shape due to the difference in average density between a vehicle of the power plant, the upper tether part and the lower tether part.

A further example embodiment relates to a method for control of a submersible power plant, wherein the submersible power plant comprises a tether connecting the submersible power plant with a structure, wherein the tether comprises an upper tether part and a lower tether part. The upper tether part having an average density higher than the surrounding fluid and a hydrodynamic cross section, and where the upper tether part is connected to the vehicle. The lower tether part having an average density lower than the surrounding fluid and a non-hydrodynamic cross section, and where the lower tether part is connected to the structure. The method comprises:
- forming the tether into an S-shape due to the difference in average density between a vehicle of the power plant, the upper tether part and the lower tether part when the submersible plant does not move in a predetermined trajectory.

A tether having the three parts as above will also be able to display the behaviour of forming an S-shape due to the difference in average density.

The advantages with the method are the same as is described for the submersible power plant above.

### BRIEF DESCRIPTION OF THE DRAWINGS

Figure 1 schematically shows a power plant according to example embodiments of the application,
Figures 2a and 2b schematically shows two alternative embodiments of a tether,
Figure 3 schematically shows a cross sectional view of an upper tether part of a tether,
Figure 4 schematically shows the power plant during slack water.

### DETAILED DESCRIPTION

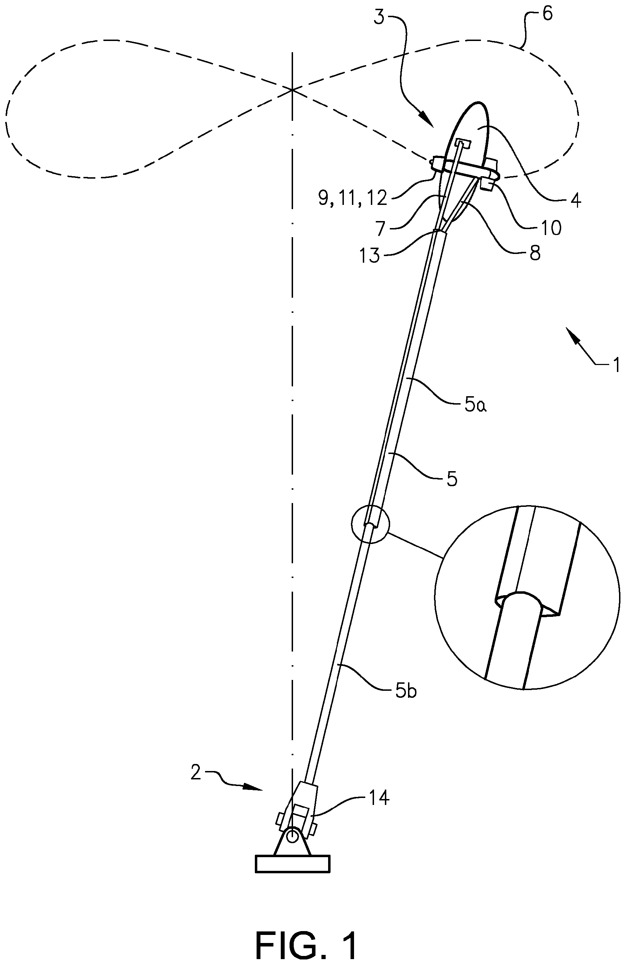

Figure 1 schematically shows a submersible power plant 1 according to example embodiments of the application. The submersible power plant 1 is submerged in a fluid and comprises a structure 2 and a vehicle 3 comprising at least one wing 4. The vehicle 3 is arranged to be secured to the structure 2 by means of at least one tether 5. The vehicle 3 is arranged to move in a predetermined trajectory 6 by means of a fluid stream passing the vehicle 3. The predetermined trajectory may be a figure eight, a circle, an oval or another suitable closed trajectory. In figure 1 the direction of the fluid stream is pointing essentially into the figure. The fluid stream can for instance be an ocean current, a tidal stream or a river stream.

The vehicle 3 further comprises front struts 7 and a rear strut 8. The vehicle 3 may comprise a nacelle 9 which is attached to the wing 4. The nacelle 9 may be positioned below or above the wing 4 and is attached to the wing 4 for instance by means of a pylon. The vehicle 3 may further comprise control surfaces, for instance in the form of a vertical rudder 10. The front struts 7 are attached to the wing 4 and the rear strut 8 is in one example embodiment attached to the nacelle 9. The vehicle 3 is steered along the predetermined trajectory 6 by means of a control system that may control one or more control surfaces or other steering means. The control system can be implemented for instance by means of one or more on-board CPUs or control circuit boards or by signals sent from a remote control centre.

The nacelle 9 comprises a turbine 11 rotatably connected to a generator 12. The movement of the vehicle 3 through the fluid causes the turbine 11, and thereby the generator 12, to rotate. In this way electrical power is generated. The submersible plant comprises a power take off system feeding the electrical power through electrical cables in the tether 5 to an electricity supply network, which in turn transfers the power to a power grid.

The tether 5 comprises an upper tether part 5a and a lower tether part 5b. The upper tether part 5a has a hydrodynamic profile or cross section and has an average density higher than the fluid in the fluid stream. The lower tether part 5b has a non-hydrodynamic profile or cross section and has an average density lower than the fluid in the fluid stream. The upper tether part 5a connects to the vehicle 3 by means of a top joint 13 to which the struts are attached. The lower tether part 5b connects to the structure 2 by means of a bottom joint 14.

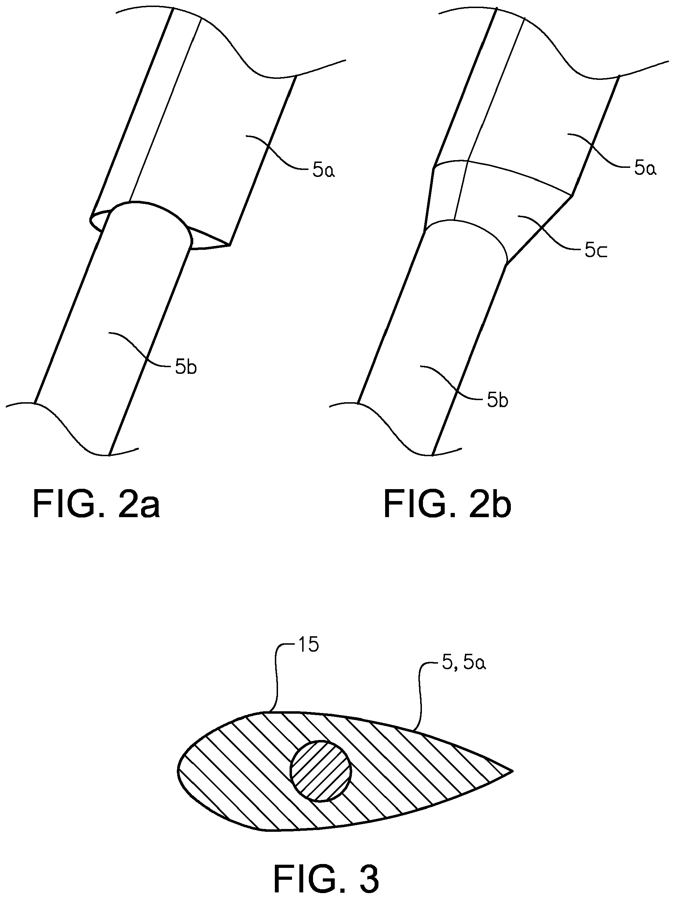

Figures 2a and 2b schematically shows two alternative embodiments of a tether 5. In figure 2a the transition between the upper tether part 5a and the lower tether part 5b is distinct meaning that there is no transition part between the upper tether part 5a and the lower tether part 5b. The hydrodynamic profile of the upper tether part 5a ends at a transition point 15 between the upper tether part 5a and the lower tether part 5b where the non-hydrodynamic profile of the lower tether part 5b continues. In figure 2b the upper tether part 5a and the lower tether part 5b transitions from the hydrodynamic shape of the upper tether part 5a to the non-hydrodynamic shape of the lower tether part 5b by means of a transition part 5c. The transition part 5c can take any suitable intermediate shape.

The upper tether part 5a and the lower tether part 5b can be connected in a number of ways as long as the mechanical connection between the upper tether part 5a and lower tether part 5b is made strong enough to meet the force requirements of the respective upper tether part 5a and the lower tether part 5b.

Figure 3 schematically shows a cross sectional view of an upper tether part 5a of a tether 5 according to one example embodiment. The cross section of the upper tether part 5a is hydrodynamic and can have any suitable airfoil or hydrofoil shape. Hence, the outer shape may have/form a wing-shaped, or drop-shaped, cross-sectional profile, or a wing-like structure. Hence, according to an exemplifying embodiment, the cross-sectional profile of the upper tether part 5a corresponds to a wing profile, which provides reduced drag in relation to a non-wing profiled cross-section having the same effective thickness in relation to the relative flow direction of the liquid. Furthermore, with a wing profile, the effective thickness in relation to the relative flow direction of the liquid may be reduced while maintaining the same cross-sectional area of a tensile force bearing portion, which may further reduce the drag.

The lower tether part 5b can have any suitable non-hydrodynamic cross section, for example axisymmetrical shapes such as elliptical, circular or oval. The length of the tether 5 may be between 1 and 500 meters, specifically between 20 and 300 meters, more specifically between 30 and 200 meters.

The upper tether part 5a comprises at least one shell member 15 which forms the outer shape of the upper tether part 5a. The shell member 15 comprises at least one of an elastomeric material, a thermoplastic material, a thermoset material, a carbon fibre laminate, a glass fibre laminate, a composite material, a material comprising polyurethane, a polyurethane elastomer material, or other suitable materials, and/or combinations thereof. Alternatively, the shell member 15 may comprise an outer layer(s) of fibre, or composite, laminates, wherein an inner region may be filled with filler material. As can be seen from figure 3, various cables run through the tether 5. Examples of cables running through the tether 5 are power and data communication cables. Additionally a tensile force bearing member runs through the tether 5 to provide an elastic tether 5 and to allow for a flexible and thus robust and logistically beneficial tether 5, e.g. allowing for coiling or winding. For example, the tensile force bearing portion comprises UHMWPE (Ultra-high-molecular-weight polyethylene), for example Dyneema® or similar high performance fibres. Furthermore, a steel wire rope, or steel wire ropes, may be utilized as tensile force bearing portion, or as tensile members. Preferably, the entire tether 5 is elastic.

The lower tether part 5b comprises at least one shell member which forms the outer shape of the lower tether part 5b. The shell member comprises at least one of an elastomeric material, a thermoplastic material, a thermoset material, a carbon fibre laminate, a glass fibre laminate, a composite material, a material comprising polyurethane, a polyurethane elastomer material, or other suitable materials, and/or combinations thereof. Alternatively, the shell member may comprise an outer layer(s) of fibre, or composite, laminates, wherein an inner region may be filled with filler material. As with the upper tether part 5a, cables run through the lower tether part 5b. Examples of cables running through the tether 5 are power and data communication cables. Additionally a tensile force bearing member runs through the tether 5 to provide an elastic tether 5 and to allow for a flexible and thus robust and logistically beneficial tether 5, e.g. allowing for coiling or winding. For example, the tensile force bearing portion comprises UHMWPE (Ultra-high-molecular-weight polyethylene), for example Dyneema® or similar high performance fibres. Furthermore, a steel wire rope, or steel wire ropes, may be utilized as tensile force bearing portion, or as tensile members.

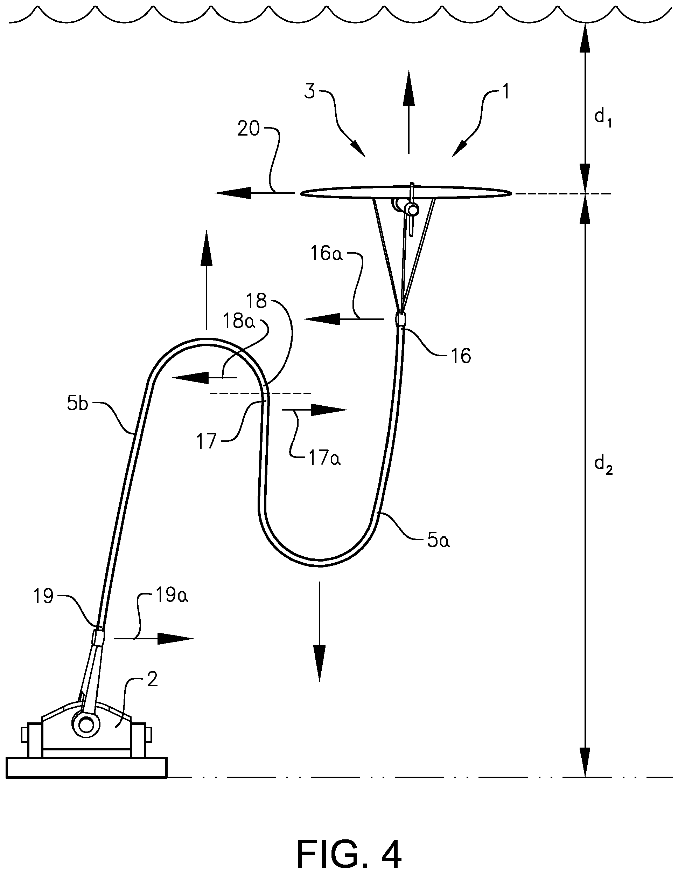

Figure 4 schematically shows the submersible power plant 1 during slack water. According to example embodiments of the invention the submersible power plant 1 comprises a tether 5 that is capable of handling the conditions of both movement along a predetermined trajectory 6 as well as keeping a good position in slack water. A tether 5 comprising an upper tether part 5a having an average density higher than the fluid, has a hydrodynamic cross section and is arranged to be connected to the vehicle 3 and a lower tether part 5b having an average density lower than the fluid, has a non-hydrodynamic cross section and is arranged to be connected to the structure 2 allows for the submersible power plant 1 to handle the conditions of slack water well.

In figure 4 it can be seen that the submersible plant 1 comprises three power plant sections with different buoyancy. The first power plant section is the vehicle 3 itself which has positive buoyancy and will strive to reach the surface as indicated by the arrow next to the vehicle. The buoyancy of the vehicle 3 can be adjusted by implementing one or more known buoyancy techniques, for instance in the wing 4. The second section is the upper tether part 5a which has negative buoyancy. The negative buoyance is achieved for instance by adjusting the amount of material used to form the upper tether part 5a or by using materials with various densities. This part thus sinks which is indicated by the arrow next to the upper tether part 5a. The third power plant section is the lower tether part 5b which has positive buoyancy. The positive buoyancy is achieved for instance by having a shell member comprising an outer layer of fibre, or composite or laminates, wherein an inner region may be filled with filler material. The density of the lower part is thus controlled by adding gas filled containers to the inner region of the lower tether part 5b. Alternatively, the density of the lower tether part 5b is controlled by attaching elements to the outside of the tether 5 having a density lower than the surrounding fluid. The lower tether part 5b will strive to reach the surface as indicated by the arrow.

The effect of the varying densities of the three power plant sections is that the tether 5 during slack water forms a non-linear shape, preferably a figure S-shape due to that the average density of the vehicle 3 of the power plant 1, the upper tether part 5a and the lower tether part 5b are different as described above. Another effect is that it is possible to control the position of the vehicle 3 either in relation to the surface of the body of fluid in which the power plant 1 is submerged, indicated by depth d1, or in relation to a bottom surface over which the vehicle 3 moves, indicated by depth d2, or both.

Another advantage of the non-linear shape is that the vehicle 3 and tether 5 strives to approach each other. The principle behind this is that when a flexible body having two ends, e.g. a tether, experiences a force on the middle of the body, the two ends will strive to move towards each other while the body forms an arc. The first tether part is attached to the vehicle 3 and the lower tether part 5b. When the upper tether part 5a sinks due to having a higher density than the fluid a first end part 16 and a second end part 17 of the upper tether part 5a strives to move towards each other as the upper tether part 5a forms an arc. A third end part 18 and a fourth end part 19 of the lower tether part 5b displays the same behaviour as they are in turn attached to the upper tether part 5a and the structure 2. Arrows 16a, 17a, 18a, 19a next to the end parts 16, 17, 18, 19 aim to illustrate the forces acting on the respective end part. As the fourth end part 19 is fixed to the structure 2 and cannot move sideways this results in that the vehicle 3 as well as the upper tether part 5a moves sideways towards the structure 2. The resulting forces on the different parts of the tether 5 and vehicle 3 makes the tether 5 and vehicle 3 move towards the structure 2 as indicated by arrow 20. The lower tether part 5b, with its positive buoyancy strives to right itself in an upright position. All these effects aim towards reducing or completely removing the risk of the tether 5 tangling, twisting or otherwise damaging the tether 5. The non-linear shape and the movement of the vehicle 3 towards the structure 2 also improves the handling of the power plant 1 when the direction of the fluid stream changes direction, for instance for a tidal stream.

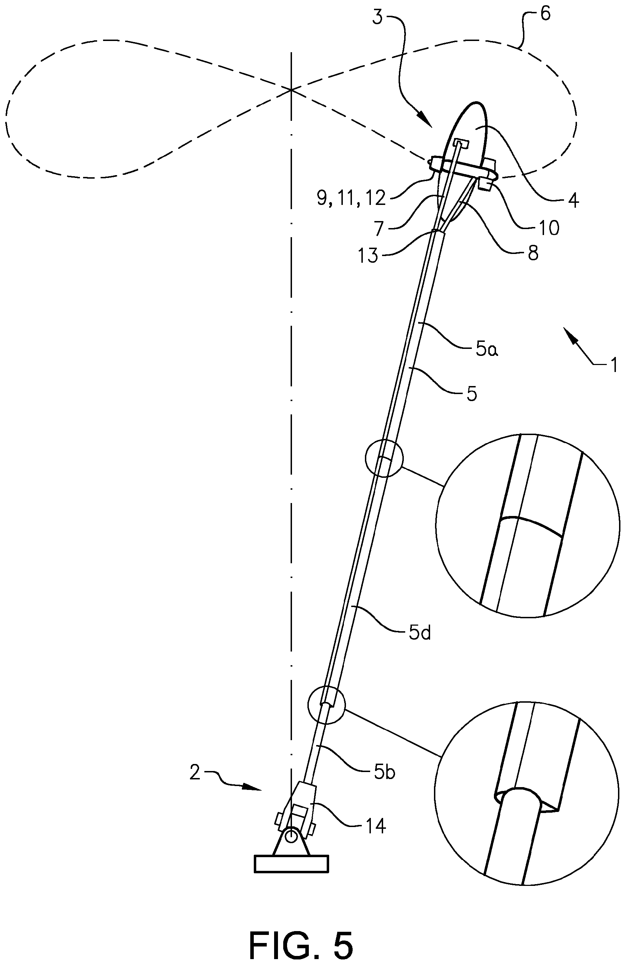

Figure 5 schematically shows a submersible power plant 1 according to a second example embodiment. The submersible power plant 1 is submerged in a fluid and comprises a structure 2 and a vehicle 3 comprising at least one wing 4. The vehicle 3 is arranged to be secured to the structure 2 by means of at least one tether 5. The vehicle 3 is arranged to move in a predetermined trajectory 6 by means of a fluid stream passing the vehicle 3. In figure 1 the direction of the fluid stream is pointing essentially into the figure. The fluid stream can for instance be an ocean current, a tidal stream or a river stream.

The vehicle 3 further comprises front struts 7 and a rear strut 8. The vehicle 3 may comprise a nacelle 9 which is attached to the wing 4. The nacelle 9 may be positioned below or above the wing 4 and is attached to the wing 4 for instance by means of a pylon. The vehicle 3 may further comprise control surfaces, for instance in the form of a vertical rudder 10. The front struts 7 are attached to the wing 4 and the rear strut 8 is in one example embodiment attached to the nacelle 9. The vehicle 3 is steered along the predetermined trajectory 6 by means of a control system that may control one or more control surfaces or other steering means. The control system can be implemented for instance by means of one or more on-board CPUs or control circuit boards or by signals sent from a remote control centre.

The nacelle 9 comprises a turbine 11 rotatably connected to a generator 12. The movement of the vehicle 3 through the fluid causes the turbine 11, and thereby the generator 12, to rotate. In this way electrical power is generated. The submersible plant comprises a power take off system feeding the electrical power through electrical cables in the tether 5 to an electricity supply network, which in turn transfers the power to a power grid.

The tether 5 comprises an upper tether part 5a, a lower tether part 5b and an intermediate tether part 5d. The upper tether part 5a has a hydrodynamic profile or cross section and has an average density higher than the fluid in the fluid stream. The lower tether part 5b has a non-hydrodynamic profile or cross section and has an average density lower than the fluid in the fluid stream. The intermediate tether part 5d has a hydrodynamic profile or cross section and has an average density lower than the fluid in the fluid stream. The upper tether part 5a connects to the vehicle 3 by means of a top joint 13 to which the struts are attached. The lower tether part 5b connects to the structure 2 by means of a bottom joint 14.

The upper tether part 5a and the intermediate tether part 5d can be connected in a number of ways as long as the mechanical connection between the upper tether part 5a and intermediate tether part 5d is made strong enough to meet the force requirements of the respective upper tether part 5a and the intermediate tether part 5d. The intermediate tether part 5d and the lower tether part 5b can be connected in a number of ways as long as the mechanical connection between the intermediate tether part 5d and lower tether part 5b is made strong enough to meet the force requirements of the respective intermediate tether part 5d and the lower tether part 5d. See also the figure description of figures 2a and 2b for example connections/transitions between tether parts.

The intermediate tether part 5d is made as the upper tether part 5a, differing in density.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description are to be regarded as illustrative in nature, and not restrictive.

## Claims

1. A submersible power plant (1), wherein the submersible power plant (1) is submerged in a fluid, the submersible power plant (1) comprises a structure (2) and a vehicle (3), the vehicle (3) comprising at least one wing (4), the vehicle (3) being arranged to be secured to the structure (2) by means of at least one tether (5); the vehicle (3) being arranged to move in a predetermined trajectory (6) by means of a fluid stream passing the vehicle (3), **characterized in that** the tether (5) comprises an upper tether part (5a) and a lower tether part (5b); wherein the upper tether part (5a) has an average density higher than the fluid, has a hydrodynamic cross section and is arranged to be connected to the vehicle (3); wherein the lower tether part (5b) has an average density lower than the fluid, has a non-hydrodynamic cross section and is arranged to be connected to the structure (2).

2. Submersible power plant (1) according to claim 1, wherein the upper tether part (5a) comprises 30 - 70 % of the length of the tether (5) and the lower tether part (5b) comprises 70 - 30 % of the length of the tether (5).

3. Submersible power plant (1) according to claim 1 or 2, wherein the tether (5) comprises an intermediate part having an average density lower than the fluid and a hydrodynamic cross section and is arranged in between the upper tether part (5a) and the lower tether part (5b).

4. Submersible power plant (1) according to claim 3, wherein the length of the upper tether part (5a) may be between 20 - 40 % of the length of the tether (5), the length of the intermediate tether part may be between 20 - 60 % and the length of the lower tether part (5b) may be between 10 - 20 % of the length of the tether (5).

5. Submersible power plant (1) according to any one of claims 1-4, wherein the vehicle (3) of the power plant has an average density lower than the fluid.

6. Submersible power plant (1) according to any one of claims 1-5, wherein the fluid is water and the average density of the lower tether part (5b) is between 700 - 900 kg/m3, specifically between 750 - 850 kg/m3, more specifically 800 kg/m3 and the average density of the upper tether part (5a) is between 1050-1250 kg/m3, specifically between 1100 - 1200 kg/m3, more specifically 1160 kg/m3.

7. Submersible power plant (1) according to claim 3, wherein the fluid is water and the average density of the intermediate tether part is between 700 - 900 kg/m3, specifically between 750 - 850 kg/m3, more specifically 800 kg/m3.

8. Submersible power plant (1) according to claim 1-7, wherein the tether (5) comprises a shell member (15) which forms the outer shape of the tether (5).

9. Submersible power plant (1) according to claim 8, wherein the shell member (15) comprises at least one of an elastomeric material, a thermoplastic material, a thermoset material, a carbon fibre laminate, a glass fibre laminate, a composite material, a material comprising polyurethane, a polyurethane elastomer material, steel and/or combinations thereof.

10. Submersible power plant (1) according to claim 8, wherein the shell member (15) comprises an outer layer(s) of fibre, or composite or laminates, wherein an inner region may be filled with filler material, wherein the density of the lower part is adjusted by adding gas filled containers to the inner region of the lower tether part (5b).

11. Submersible power plant (1) according to any one of claims 1-10, wherein the density of the lower tether part (5b) is adjusted by attaching elements with a density lower than the surrounding fluid to the outside of the tether (5).

12. Submersible power plant (1) according to any one of the preceding claims, wherein the vehicle (3) comprises:
- a nacelle (9) comprising a turbine (11) connected to a generator (12), the turbine (11) being driven by the movement of the vehicle (3),
- front struts (7) and a rear strut (8) arranged to attach the vehicle (3) to the tether (5), and
wherein the upper tether part (5a) connects to the vehicle (3) by means of a top joint (13).

13. Submersible power plant (1) according to any one of claims 1-12, wherein the lower tether (5) part connects to the structure (2) by means of a bottom joint (14).

14. Submersible power plant (1) according to any one of claims 1-13, wherein the tether (5) is flexible.

15. Method for control of a submersible power plant (1), wherein the method comprises:
- arranging a tether (5) connecting a submersible power plant (1) with a structure (2), wherein the tether (5) comprises an upper tether part (5a) and a lower tether part (5b);
- arranging the upper tether part (5a) to have an average density higher than the surrounding fluid,
- arranging the upper tether part (5a) to have a hydrodynamic cross section, and
- arranging the upper tether part (5a) to be connected to the vehicle (3);
- arranging the lower tether part (5b) to have an average density lower than the surrounding fluid,
- arranging the lower tether part (5b) to have a non-hydrodynamic cross section, and
- arranging the lower tether part (5b) to be connected to the structure (2),
wherein in when the submersible power plant (1) moves in a predetermined trajectory (6), the tether (5) of the submersible power plant (1) experiences a reduction in tether vibrations induced by whiplash; and wherein when the submersible plant does not move in a predetermined trajectory (6), the tether (5) of the submersible power plant (1) forms an S-shape due to the difference in average density between a vehicle (3) of the power plant, the upper tether part (5a) and the lower tether part (5b).

## Patentansprüche

1. Unterwasserkraftwerk (1), wobei das Unterwasserkraftwerk (1) in ein Fluid eingetaucht ist, das Unterwasserkraftwerk (1) eine Struktur (2) und ein Fahrzeug (3) umfasst, wobei das Fahrzeug (3) zumindest einen Flügel (4) umfasst, das Fahrzeug (3) so angeordnet ist, dass es mittels mindestens eines Haltegurts (5) an der Struktur (2) befestigt ist; wobei das Fahrzeug (3) so angeordnet ist, dass es sich in einer vorgegebenen Bahn (6) mittels eines das Fahrzeug (3) passierenden Fluidstroms bewegt, **dadurch gekennzeichnet, dass** der Haltegurt (5) einen oberen Haltegurtteil (5a) und einen unteren Haltegurtteil (5b) umfasst; wobei der obere Haltegurtteil (5a) eine durchschnittliche Dichte aufweist, die höher als das Fluid ist, einen hydrodynamischen Querschnitt aufweist und so angeordnet ist, dass er mit dem Fahrzeug (3) verbunden ist; wobei der untere Haltegurtteil (5b) eine durchschnittliche Dichte aufweist, die niedriger als das Fluid ist, einen nicht hydrodynamischen Querschnitt aufweist und so angeordnet ist, dass er mit der Struktur (2) verbunden ist.

2. Unterwasserkraftwerk (1) nach Anspruch 1, wobei der obere Haltegurtteil (5a) 30 - 70 % der Länge des Haltegurts (5) umfasst, und der untere Haltegurtteil (5b) 70 - 30 % der Länge des Haltegurts (5) umfasst.

3. Unterwasserkraftwerk (1) nach Anspruch 1 oder 2, wobei der Haltegurt (5) einen Zwischenteil mit einer mittleren Dichte, die niedriger als das Fluid ist, und einem hydrodynamischen Querschnitt umfasst und zwischen dem oberen Haltegurtteil (5a) und dem unteren Haltegurtteil (5b) angeordnet ist.

4. Unterwasserkraftwerk (1) nach Anspruch 3, wobei die Länge des oberen Haltegurtteils (5a) zwischen 20 - 40 % der Länge des Haltegurts (5) betragen kann, die Länge des zwischenliegenden Haltegurtteils zwischen 20 - 60 % betragen kann, und die Länge des unteren Haltegurtteils (5b) zwischen 10 - 20 % der Länge des Haltegurts (5) betragen kann.

5. Unterwasserkraftwerk (1) nach einem der Ansprüche 1 bis 4, wobei das Fahrzeug (3) des Kraftwerks eine durchschnittliche Dichte aufweist, die niedriger als das Fluid ist.

6. Unterwasserkraftwerk (1) nach einem der Ansprüche 1 bis 5, wobei das Fluid Wasser ist, und die durchschnittliche Dichte des unteren Haltegurtteils (5b) zwischen 700 - 900 kg/m3, insbesondere zwischen 750 - 850 kg/m3, genauer 800 kg/m3, beträgt, und die durchschnittliche Dichte des oberen Haltegurtteils (5a) zwischen 1050 - 1250 kg/m3, insbesondere zwischen 1100 - 1200 kg/m3, genauer 1160 kg/m3, beträgt.

7. Unterwasserkraftwerk (1) nach Anspruch 3, wobei das Fluid Wasser ist, und die durchschnittliche Dichte des zwischenliegenden Haltegurtteils zwischen 700 - 900 kg/m3, insbesondere zwischen 750 - 850 kg/m3, genauer 800 kg/m3, beträgt.

8. Unterwasserkraftwerk (1) nach den Ansprüchen 1 bis 7, wobei der Haltegurt (5) ein die äußere Form des Haltegurts (5) bildendes Schalenelement (15) umfasst.

9. Unterwasserkraftwerk (1) nach Anspruch 8, wobei das Schalenelement (15) mindestens eines aus einem Elastomermaterial, einem thermoplastischen Material, einem duroplastischen Material, einem Kohlefaserlaminat, einem Glasfaserlaminat, einem Verbundwerkstoffmaterial, einem Material umfassend Polyurethan, einem Polyurethanelastomermaterial, Stahl und/oder Kombinationen davon umfasst.

10. Unterwasserkraftwerk (1) nach Anspruch 8, wobei das Schalenelement (15) eine Außenschicht(en) aus Faser oder einen Verbundwerkstoff oder Laminate umfasst, wobei ein innerer Bereich mit Füllmaterial gefüllt werden kann, wobei die Dichte des unteren Teils durch Hinzufügen von gasgefüllten Behältern zum inneren Bereich des unteren Haltegurtteils (5b) eingestellt wird.

11. Unterwasserkraftwerk (1) nach einem der Ansprüche 1 bis 10, wobei die Dichte des unteren Haltegurtteils (5b) durch das Befestigen von Elementen mit einer Dichte, die niedriger als das umgebende Fluid ist, an der Außenseite des Haltegurts (5) eingestellt wird.

12. Unterwasserkraftwerk (1) nach einem der vorhergehenden Ansprüche, wobei das Fahrzeug (3) umfasst:
- eine Gondel (9), welche eine mit einem Generator (12) verbundene Turbine (11) umfasst, wobei die Turbine (11) durch die Bewegung des Fahrzeugs (3) angetrieben wird,
- vordere Streben (7) und eine hintere Strebe (8), die angeordnet sind, um das Fahrzeug (3) an dem Haltegurt (5) zu befestigen, und
wobei der obere Haltegurtteil (5a) mittels einer oberen Verbindung (13) mit dem Fahrzeug (3) verbunden ist.

13. Unterwasserkraftwerk (1) nach einem der Ansprüche 1 bis 12, wobei der untere Haltegurtteil (5) mittels einer Bodenverbindung (14) mit der Struktur (2) verbunden ist.

14. Unterwasserkraftwerk (1) nach einem der Ansprüche 1 bis 13, wobei der Haltegurt (5) flexibel ist.

15. Verfahren zur Steuerung eines Unterwasserkraftwerks (1), wobei das Verfahren umfasst:
- Anordnen eines ein Unterwasserkraftwerk (1) mit einer Struktur (2) verbindenden Haltegurts (5), wobei der Haltegurt (5) einen oberen Haltegurtteil (5a) und einen unteren Haltegurtteil (5b) umfasst;
- Anordnen des oberen Haltegurtteils (5a) mit einer durchschnittlichen Dichte, die höher als das umgebende Fluid ist,
- Anordnen des oberen Haltegurtteils (5a) mit einem hydrodynamischen Querschnitt und
- Anordnen des mit dem Fahrzeug (3) zu verbindenden oberen Haltegurtteils (5a);
- Anordnen des unteren Haltegurtteils (5b) mit einer durchschnittlichen Dichte, die niedriger als das umgebende Fluid ist,
- Anordnen des unteren Haltegurtteils (5b) mit einem nicht hydrodynamischen Querschnitt und
- Anordnen des mit der Struktur (2) zu verbindenden unteren Haltegurtteils (5b),
wobei, wenn sich das Unterwasserkraftwerk (1) in einer vorgegebenen Bahn (6) bewegt, der Haltegurt (5) des Unterwasserkraftwerks (1) eine Verringerung von durch Schleudereffekt verursachten Haltegurtvibrationen erfährt; und wobei, wenn sich das Unterwasserkraftwerk nicht in einer vorgegebenen Bahn (6) bewegt, der Haltegurt (5) des Unterwasserkraftwerks (1) wegen des Unterschieds der durchschnittlichen Dichte zwischen einem Fahrzeug (3) des Kraftwerks, dem oberen Haltegurtteil (5a) und dem unteren Haltegurtteil (5b) eine S-Form bildet.

## Revendications

1. Centrale électrique submersible (1), la centrale électrique submersible (1) étant immergée dans un fluide, la centrale électrique submersible (1) comprenant une structure (2) et un véhicule (3), le véhicule (3) comprenant au moins une aile (4), le véhicule (3) étant agencé pour être fixé à la structure (2) au moyen d'au moins une attache (5) ; le véhicule (3) étant agencé pour se déplacer dans une trajectoire (6) prédéterminée au moyen d'un flux de fluide traversant le véhicule (3), **caractérisée en ce que** l'attache (5) comprend une partie d'attache supérieure (5a) et une partie d'attache inférieure (5b) ; dans laquelle la partie d'attache supérieure (5a) présente une densité moyenne supérieure à celle du fluide, comporte une section hydrodynamique et est agencée pour être raccordée au véhicule (3) ; dans laquelle la partie d'attache inférieure (5b) présente une densité moyenne inférieure à celle du fluide, comporte une section transversale non hydrodynamique et est agencée pour être raccordée à la structure (2).

2. Centrale électrique submersible (1) selon la revendication 1, dans laquelle la partie d'attache supérieure (5a) comprend 30 à 70 % de la longueur de l'attache (5), et la partie d'attache inférieure (5b) comprend 70 à 30% de la longueur de l'attache (5).

3. Centrale électrique submersible (1) selon la revendication 1 ou 2, dans laquelle l'attache (5) comprend une partie intermédiaire ayant une densité moyenne inférieure à celle du fluide et une section hydrodynamique et est agencée entre la partie d'attache supérieure (5a) et la partie d'attache inférieure (5b).

4. Centrale électrique submersible (1) selon la revendication 3, dans laquelle la longueur de la partie d'attache supérieure (5a) peut être comprise entre 20 - 40 % de la longueur de l'attache (5), la longueur de la partie d'attache intermédiaire peut être comprise entre 20 - 60 %, et la longueur de la partie d'attache inférieure (5b) peut être comprise entre 10 - 20 % de la longueur de l'attache (5).

5. Centrale électrique submersible (1) selon l'une quelconque des revendications 1 à 4, dans laquelle le véhicule (3) de la centrale électrique présente une densité moyenne inférieure à celle du fluide.

6. Centrale électrique submersible (1) selon l'une quelconque des revendications 1 à 5, dans laquelle le fluide est de l'eau et la densité moyenne de la partie d'attache inférieure (5b) est comprise entre 700 - 900 kg/m3, spécifiquement entre 750 - 850 kg/m3, plus spécifiquement 800 kg/m3, et la densité moyenne de la partie d'attache supérieure (5a) est comprise entre 1050 -1250 kg/m3, spécifiquement entre 1100 - 1200 kg/m3, plus spécifiquement 1160 kg/m3.

7. Centrale électrique submersible (1) selon la revendication 3, dans laquelle le fluide est de l'eau et la densité moyenne de la partie d'attache intermédiaire est comprise entre 700 - 900 kg/m3, spécifiquement entre 750 - 850 kg/m3, plus spécifiquement 800 kg/m3.

8. Centrale électrique submersible (1) selon les revendications 1 à 7, dans laquelle l'attache (5) comprend un élément de coque (15) qui crée la forme extérieure de l'attache (5).

9. Centrale électrique submersible (1) selon la revendication 8, dans laquelle l'élément de coque (15) comprend au moins l'un parmi un matériau élastomère, un matériau thermoplastique, un matériau thermo-durci, un stratifié en fibre de carbone, un stratifié en fibre de verre, un matériau composite, un matériau comprenant du polyuréthane, un matériau élastomère de polyuréthane, l'acier et / ou leurs combinaisons.

10. Centrale électrique submersible (1) selon la revendication 8, dans laquelle l'élément de coque (15) comprend une couche ou des couches extérieures de fibres, ou composites ou stratifiés, dans laquelle une région intérieure peut être remplie de matériau de remplissage, dans laquelle la densité de la partie inférieure est ajustée en ajoutant des conteneurs remplis de gaz à la région intérieure de la partie d'attache inférieure (5b).

11. Centrale électrique submersible (1) selon l'une quelconque des revendications 1 à 10, dans laquelle la densité de la partie d'attache inférieure (5b) est ajustée en fixant des éléments ayant une densité inférieure à celle du fluide environnant à l'extérieur de l'attache (5).

12. Centrale électrique submersible (1) selon l'une quelconque des revendications précédentes, dans laquelle le véhicule (3) comprend :
- une nacelle (9) comprenant une turbine (11) raccordée à un générateur (12), la turbine (11) étant entraînée par le mouvement du véhicule (3),
- des entretoises avant (7) et une entretoise arrière (8) agencées pour fixer le véhicule (3) à l'attache (5), et
dans laquelle la partie d'attache supérieure (5a) est raccordée au véhicule (3) au moyen d'un joint supérieur (13).

13. Centrale électrique submersible (1) selon l'une quelconque des revendications 1 à 12, dans laquelle la partie d'attache inférieure (5) est raccordée à la structure (2) au moyen d'un joint inférieur (14).

14. Centrale électrique submersible (1) selon l'une quelconque des revendications 1 à 13, dans laquelle l'attache (5) est flexible.

15. Procédé de commande d'une centrale électrique submersible (1), dans lequel le procédé comprend :
- l'agencement d'une attache (5) reliant une centrale électrique submersible (1) à une structure (2), l'attache (5) comprenant une partie d'attache supérieure (5a) et une partie d'attache inférieure (5b) ;
- l'agencement de la partie d'attache supérieure (5a) de manière à avoir une densité moyenne supérieure à celle du fluide environnant,
- l'agencement de la partie d'attache supérieure (5a) de manière à avoir une section hydrodynamique, et
- l'agencement de la partie d'attache supérieure (5a) de manière à être raccordée au véhicule (3) ;
- l'agencement de la partie d'attache inférieure (5b) de manière à avoir une densité moyenne inférieure à celle du fluide environnant,
- l'agencement de la partie d'attache inférieure (5b) de manière à avoir une section transversale non hydrodynamique, et
- l'agencement de la partie d'attache inférieure (5b) de manière à être raccordée à la structure (2),
dans lequel lorsque la centrale électrique submersible (1) se déplace dans une trajectoire prédéterminée (6), l'attache (5) de la centrale électrique submersible (1) subit une réduction des vibrations d'attache induites par le coup du lapin; et dans lequel lorsque la centrale submersible ne se déplace pas dans une trajectoire prédéterminée (6), l'attache (5) de la centrale électrique submersible (1) crée une forme en S en raison de la différence de densité moyenne entre un véhicule (3) de la centrale électrique, la partie d'attache supérieure (5a) et la partie d'attache inférieure (5b).
